## Europäisches Patentamt
## European Patent Office
## Office européen des brevets

(19)

(11) Publication number: **0 063 910**
**A2**

(12)
# EUROPEAN PATENT APPLICATION

(21) Application number: **82302007.8**

(22) Date of filing: **20.04.82**

(51) Int. Cl.³: **B 03 B 9/02**

(30) Priority: **24.04.81 GB 8112686**

(43) Date of publication of application: **03.11.82**
**Bulletin 82/44**

(84) Designated Contracting States: **DE FR IT NL SE**

(71) Applicant: **THOMAS BROADBENT & SONS LIMITED, Huddersfield, West Yorkshire HD1 3EA (GB)**

(72) Inventor: **Wright, John, 38 Edgeware Road Dalton, Huddersfield West Yorkshire (GB)**
Inventor: **Grimwood, Geoffrey Luther, Shaley House Wooldale Holmfirth, Nr. Huddersfield West Yorkshire (GB)**

(74) Representative: **Huntingford, David Ian et al, W.P. THOMPSON & CO. Coopers Building Church Street, Liverpool L1 3AB (GB)**

(54) **Multi phase separation process.**

(57) A multi-phase separation process which is particularly useful in connection with the cleaning of cuttings resulting from conventional oil drilling techniques.

A mixture of carrier liquid (sea water), a contaminant liquid (oil) and solids cuttings is passed over the screen of a screen bowl centrifuge while simultaneously washing the mixture with further sea water whereby a finer portion of the solids particles is washed through the screen taking with it the contaminant liquid oil which has been washed off the solids by the sea water and which adheres to the finer solids particles, thereby leaving the remaining, larger solids particles substantially free of oil of the "available" type which adheres to solids particles by surface tension forces only and can therefore be detached from such particles solely by immersion or washing in the carrier liquid.

Separation of the finer solids particles from the sea water carrier liquid is achieved in a secondary centrifuge.

1.
# DESCRIPTION

## "MULTI-PHASE SEPARATION PROCESS"

The present invention is concerned with a multi-phase separation process which is particularly useful in connection with the cleaning of the cuttings resulting from conventional oil drilling techniques.

Two phase solid/liquid separation is achieved conventionally by the use of solid bowl or screen bowl centrifugal decanters. Compared with the solid bowl decanter, and other things being equal, the screen bowl decanter discharges solids containing less liquid (since further separation takes place on the screen). It also provides for the washing of solids on the screen by liquid that can be collected separately and not lost to the main centrate.

Known methods of separating two liquids and one solid phase by centrifugal force include the use of a three phase solid bowl decanter. This centrifuge operates as a conventional two phase solid bowl decanter, i.e. it continuously scrolls the solids to the small diameter end of the bowl whilst the clarified liquid flows to the larger end - but incorporates a dividing plate near the liquid discharge end so that heavy and light phase liquids also separate and flow into separate chambers. Discharge of the two separated liquid phases then takes place either by splilling the liquids over weirs, skimming the liquids on their inner surfaces, or a combination of these methods.

Some important separation applications require, however, the separation of:-

(i) a carrier liquid - which represents the bulk of the liquid present in the inflow, i.e. 50-99% typically 95%;

(ii) a contaminant liquid, typically 5%; and

2.

(iii)  solids.

In this latter case, the objective of the separation is one of the following alternatives:-

(a)  to remove all of the contaminant from both solids and carrier liquid to allow the disposal of the solids free of contamination thereby avoiding an effluent problem and to allow the re-use or further processing of the carrier liquid;

(b)  to remove all of the contaminant from both solids and carrier liquid, to allow the disposal of the carrier liquid free of contamination thereby avoiding an effluent problem and to allow the re-use or further processing of the separated solids.

An example of an application of the type (a) described above lies in the separating of cuttings drilled with oil based fluids in the oil extraction industry.  For example, oil drilling beneath the sea using conventional techniques produces large quantities of a mixture of sea-water, cuttings from the region of the sea-bed being drilled, additives such as detergents, and oil.  Such an oil-contaminated mixture cannot be discharged directly into the sea for environmental reasons and to date has had to be transferred to barges for carriage ashore or, in the event of bad weather preventing such transfer, has had to be stored on the oil rig itself.

In the latter example, the objective of the separation would be to:

(a)  remove the solid drilled cuttings for disposal into the sea without biologically contaminating the sea bed and surface with oil used for drilling;

(b)  separate the sea water,used with the additives as the carrier fluid during drilling and for washing the cuttings, so that the sea water can be re-used continuously; and

3.

(c) separate the oil used for the drilling operation to prevent contamination of both drilled cuttings and re-circulated sea water.

The present invention is based upon the experimental observation that when a mixture of oil and solids (cuttings) is washed with sea water over a fine screen so that the finer particles of the solids (for example those below 15 microns) pass through the screen with the sea water, substantially all of the free oil and the oil washed off the larger solids adheres to said finer solids which pass through the screen. If, then, these finer solids are subsequently removed they take with them practically all of the free oil resulting in clean carrier sea water which can be re-cycled for further use.

In accordance with the present invention in its broadest aspect, there is provided a method of separating a mixture of a carrier liquid, a contaminant liquid and solids comprising passing the mixture over a fine screen while simultaneously washing the mixture with further carrier liquid whereby a finer portion of the solids particles is washed through the screen taking with it the contaminant liquid which has been washed off the solids by the carrier liquid and which adheres to said finer solids particles, thereby leaving the remaining, larger solids particles substantially free of "available" contaminant.

"Available" contaminant is defined as contaminant which adheres to solids particles by surface tension forces only and can therefore be detached from such particles purely by immersion or washing in the carrier liquid.

Clean carrier liquid can then be obtained by separating out the finer particles which carry the contaminant with them.

4.

Preferably, the washing is carried out with the mixture subjected to centrifugal force. For this purpose, the screen can conveniently comprise the cylindrical screen portion of a conventional screen bowl decanter centrifuge.

The subsequent separation of the finer particles carrying the oil may then be carried out using a conventional solid bowl decanter centrifuge with two-phase liquid separation or a centrifuge of the type which rotates about a vertical axis and has peripheral portions which can be opened periodically to enable accumulated solids to be discharged.

The invention is described further hereinafter, by way of example, with reference to the accompanying drawings, in which:-

Fig. 1 is a diagrammatic representation of one embodiment of an apparatus for use in performing the separation method of the present invention; and

Fig. 2 is a diagrammatic representation of a second embodiment of an apparatus for use in performing the separation method of the present invention.

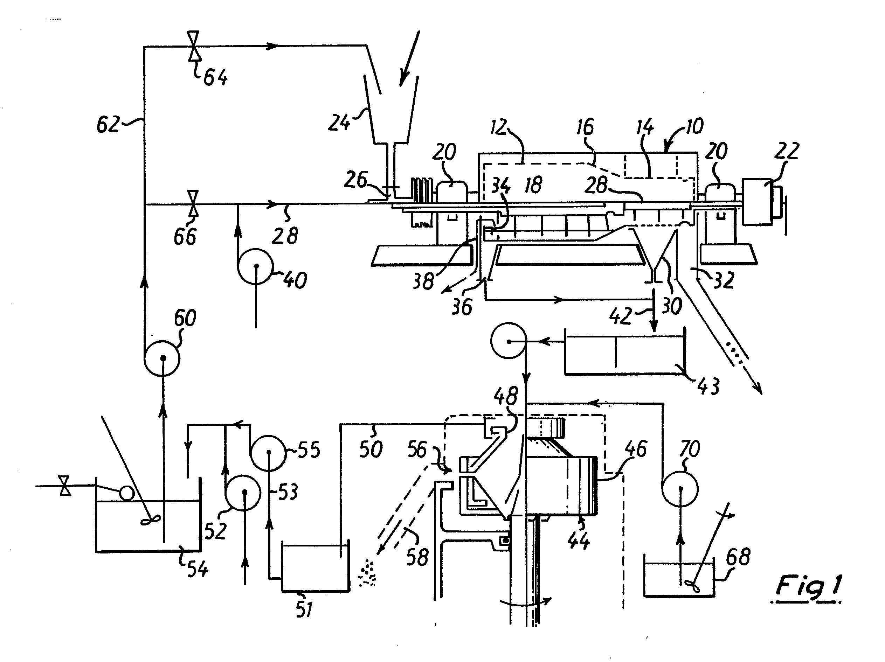

In an embodiment of Fig. 1, primary separation takes place in an essentially conventional screen bowl decanter centrifuge 10. This includes a rotating cylindrical solid bowl portion 12 connected to a perforate cylindrical screen portion 14 by way of a frusto-conical solid portion 16 which provides a ramp or beach up which solids are scrolled by a helical conveyor 18 which is rotated at a slightly different speed to the main bowl parts 12, 14 and 16. The rotating parts are supported in pedestal bearings 20, the differential speed of the scroll being obtained by means of a gearbox 22.

5.

The primary input feed enters from a feed hopper 24 via a feed pipe 26 and is discharged into the interior of the bowl portion 12 towards the frusto-conical end thereof. Provision is made for introducing a washing liquid into the interior of the screen portion 14 by means of a feed pipe 28, liquid and the finer solids passing out of the screen portion 14 being led out by way of a chute 30. A further chute 32 leads away the solids discharging from the outlet (right hand) end of the screen portion 14. The heavy phase of the liquid separated in the bowl passes over a weir 34 and discharges through a chute 36. The lighter phase of the separated liquid in the bowl is skimmed off by way of a skimmer pipe 38.

The contaminated drilled cuttings from the bore hole are supplied to the centrifuge 10 via the feed hopper 24 and primary separation takes place in the centrifuge, with any surplus oil (i.e. not attached to the solid particles by surface tension and molecular forces) being separated in the liquid zone of the machine and appearing on the surface of the sea water, where it may be skimmed off by the skimmer pipe 38. The partially dried solids being scrolled across the screen portion 14 are washed with re-circulated sea water fed via the feed pipe 28 and to which additives, such as detergents etc., can be added via a pump 40. This washes the finer particles of the scrolled solids through the screen.

As described above, it has been found that when a mixture of oil and solids (cuttings) is washed with sea water through the screen 14, the free oil already in the mixture and also the free oil washed off the larger solids particles adheres to the finer

6.

particles of the solids which pass through the screen, thus taking with them substantially all of the free oil present in the mixture. To this end, the aperture width of the screen openings, the flow rate of the wash liquid to the screen and, if necessary, the fine solids content in the feed are set so that substantially all of the contaminant oil present on the surface of larger solid particles which pass over the screen is washed off for transfer to the large available surface area of said finer solids where it is bonded by surface tension and molecular forces to pass through the screen openings with the wash liquid.

The solids content in the presently described application contains clays and similar minerals of plate-like structure which absorb oil which is bonded within the interfaces between the plates and on the plate surfaces by molecular forces. This oil is defined as being "not readily available" to contaminate the sea or marine life, and therefore solids containing oil only in this form can be safely dumped directly into the sea, i.e. straight from the outlet 32.

The remaining oil, held on the fine solids by surface tension forces only, is defined as "readily available" and must be removed to avoid pollution.

Thus the principal effect of the process on the decanter screen is the removal of the "readily available" oil from the solids so that the solids can then be safely returned to the sea without fear of contamination. Here the use of the centrifuge offers the advantage of washing the oil from the solids whilst they are in the rotational gravity field of the centrifuge and under pressures of the same order as those experienced at the bottom of the drilled hole from which the cuttings were extracted.

7.

In removing the finer particles (e.g. less than 10 microns) and not depositing these in the sea, there results another advantage since particles of this size and smaller, if dumped in the sea, may be consumed by the smallest marine animals at the bottom of the biological food chain, thus taking up the "not readily available" oil.

Having produced solids with negligible "readily available" oil for deposition into the sea without further treatment, the screen flow plus a proportion of the centrate from outlet chute 36 (which can vary from 0-100%) are remixed and passed to the secondary stage of the process via a pipe 42. Here, the flow passes, via a strage tank 43 (holding oil bonded fine solids and washed liquid which have passed through the screen 14 plus heavy phase separated centrate), to a second centrifuge 44 of the illustrated "opening bowl" type which rotates about a vertical axis and can be selectively opened at its periphery for periodically discharging accumulated solids. The secondary inflow from the pipe 42 is accelerated in the bowl 46 of the centrifuge 44 and the fine solids (the surfaces of which are wetted with oil held by surface tension and molecular forces) migrate to the outside of the rotating bowl 46 whilst the carrier liquid migrates inwards to spill over the inner lip 48 (or is skimmed off) for recirculation. It is found in practice that the centrate in the secondary bowl contains a certain amount of oil. This oil must be removed before the centrate (mainly sea water) can be re-used. For this purpose, the centrate from the bowl 44 is led via piping 50 to a static settling tank 51 where the oil can be collected from the surface. Clear sea water can be removed from the settling tank

8.

51 via piping 53 and a pump 55 to a clarified sea-water storage tank 54. Additives can be supplied to the tank 54 via a pump 52. Periodically, as soon as an acceptable volume of contaminated solids have collected, the bowl 46 opens at 56 to discharge the fine solids and oil for tertiary treatment (or storage) via a chute 58.

Clarified sea water from the storage tank 54 can be supplied to the feed hopper 24 by a pump 60, pipework 62 and a valve 64, and also to the pipe 28 via a valve 66.

The addition of polyelectrolyte to the secondary stage is made from a tank 68 via a pump 70 when necessary to improve separation.

The process is equally applicable to the separation of applications defined under (b) above.

In an alternative arrangement, the skimming off of the light phase in the primary separation can be omitted and the whole of the centrate led from the outlet 36 to the tank 43.

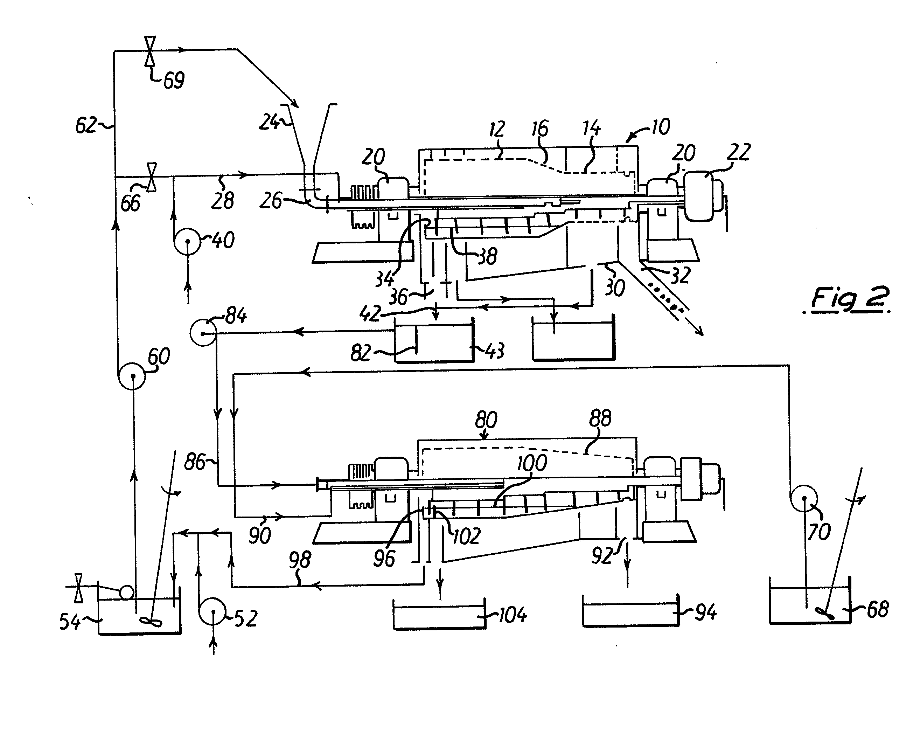

A second, preferred embodiment is illustrated in Fig. 2 which employs a solid bowl centrifuge in the secondary separation to avoid the use of the static standing tank 51.

The same parts in the embodiment of Fig. 2 have been identified by the same reference numerals as were used in connection with Fig. 1.

Primary separation again takes place in an essentially conventional screen bowl decanter centrifuge 10. This includes a rotating cylindrical solid bowl portion 12 connected to a perforate cylindrical screen portion 14 by way of a frusto-conical solid

9.

portion 16 which provides a ramp or beach up which solids are scrolled by a helical conveyor 18 which is rotated at a slightly different speed to the main bowl parts 12, 14 and 16. The rotating parts are supported in pedestal bearings 20, the differential speed of the scroll being obtained by means of a gearbox 22.

The primary input feed enters from a feed hopper 24 via a feed pipe 26 and is discharged into the interior of the bowl portion 12 towards the frusto-conical end thereof. Provision is made for introducing a washing liquid into the interior of the screen portion 14 by means of a feed pipe 28, liquid and the finer solids passing out of the screen portion 14 being led out by way of a chute 30. A further chute 32 leads away the solids discharging from the outlet (right hand) end of the screen portion 14. The heavy phase of the liquid separated in the bowl passes over a weir 34 and discharges through a chute 36. The lighter phase of the separated liquid in the bowl can, if desired, be skimmed off by way of a skimmer pipe 38. However, this is not necessary in this embodiment and the centrate leaving the bowl 12 can contain free oil.

The contaminated drilled cuttings from the bore hole are supplied to the centrifuge 10 via the feed hopper 24 and primary separation takes place in the centrifuge, with any surplus oil (i.e. not attached to the solid particles by surface tension and molecular forces) passing out of the bowl with the sea water carrier and entering the tank 43 together with the output of chute 30. The partially dried solids being scrolled across the screen portion 14 are washed

10.

with re-circulated sea water fed via the feed pipe 28 and to which additives, such as detergents etc., can be added via a pump 40. This washes the finer particles of the scrolled solids through the screen.

As in the case of the first embodiment described above, when the mixture of oil and solids (cuttings) is washed with sea water through the screen 14, the free oil already in the mixture and also the free oil washed off the larger solids particles adheres to the finer particles of the solids which pass through the screen, thus taking with them substantially all of the free oil present in the mixture. To this end, the aperture width of the screen openings, the flow rate of the wash liquid to the screen and, if necessary, the fine solids content in the feed are set so that substantially all of the contaminant oil present on the surface of larger solid particles which pass over the screen is washed off for transfer to the large available surface area of said finer solids where it is bonded by surface tension and molecular forces to pass through the screen openings with the wash liquid.

As before, the solids content in the presently described application contains clays and similar minerals of plate-like structure which absorb oil which is bonded within the interfaces between the plates and on the plate surfaces by molecular forces so as to be at the "not readily available" type which does not contaminate the sea or marine life so that solids containing oil only in this form can be safely dumped directly into the sea.

Having produced solids with negligible "readily avaialble" oil for deposition into the sea without further treatment, the screen flow together with the centrate from outlet chute 36 are remixed and passed to the secondary stage of the process via a pipe 42.

The principal difference between the first and second embodiments is that in the latter the bowl opening type of centrifuge in the secondary stage is replaced by a high speed solid bowl decanter centrifuge 80 which has provision for the separation of two liquid phases and one solid phase, namely one oil effluent, one sea water effluent and the fines solids.

The mixture of oil and sea water discharged from the primary screen bowl 10 at chute 36 and further mixed with the effluent from the screen 14 is passed into the storage tank 43. It is important to achieve very thorough mixing of all solids and liquids contained in the tank 43 to ensure adequate dispersion of these solids and satisfactory operation of the polyelectrolyte and hence of the secondary separation process. Mixing in the tank 43 is achieved by a stirrer 82.

The mixture in the tank 43 is passed via a pump 84 and pipework 86 to the interior of the solid bowl decanter 80. As before, the addition of polyelectrolyte to the second centrifuge is made from a tank 68 via a pump 70 when necessary to improve separation. The solids containing sludge discharged from the bowl at 92 are received in a tank 94. This sludge contains a quantity of oil and other drilling mud additives (such as barite). It is possible that these may be re-used as additives to the drilling mud, that is they can be re-cycled. Alternatively, the material can be burnt in a flare stack or otherwise removed for disposal.

The heavy phase of the centrate discharged from the bowl 88 is clear sea water which passes over a weir 96 and is led away by pipework 98 to the sea water storage tank 54. A light phase oil layer collects on the inner surface 100 of the centrate within the bowl and this is skimmed off by a skim pipe 102 and collected in a tank 104.

The latter oil can also be burnt in the flare stack or, alternatively, used as an additive for fresh drilling mud, that is it can be re-cycled.

Clarified sea water from the storage tank 54 can again be supplied to the feed hopper 24 by the pump 60, pipework 62 and valve 64, and also to the pipe 28 via valve 66.

One advantage of the second embodiment is that it obviates the need for the skimming off of the light phase in the primary separation. However, its principal advantage lies in providing a more efficient means of removing the free oil present in the output of the primary separation stage.

## CLAIMS

1.  A method of separating a mixture of a carrier liquid, a contaminant liquid and solids characterised by passing the mixture over a fine screen while simultaneously washing the mixture with further carrier liquid whereby a finer portion of the solids particles is washed through the screen taking with it the contaminant liquid which has been washed off the solids by the carrier liquid and which adheres to said finer solids particles, thereby leaving the remaining, larger solids particles substantially free of "available" contaminant, as hereinbefore defined.

2.  A method according to claim 1, further comprising separating out the finer particles which carry the contaminant with them, whereby to obtain clean carrier lqiuid.

3.  A method according to claim 1, wherein said step of passing the mixture over a fine screen is performed while subjecting the mixture to centrifugal force.

4.  A method of separating a mixture of a carrier liquid, a contaminant liquid and solids wherein said carrier liquid is sea water, the contaminant liquid is oil and the solids are drilling cuttings, the method being characterised by passing the mixutre over a fine screen while simultaneously washing the mixture with further carrier liquid whereby a finer portion of the solids particles is washed through the screen taking with it the contaminant liquid which has been washed off the solids by the carrier liquid and which adheres to said finer solids particles, thereby leaving the remaining, larger solids particles substantially free of contaminant of the "available" type which adheres to solids particles by surface tension forces only and can therefore be detached from such particles solely by immersion or washing in the carrier liquid.

5.    A method according to claim 4, wherein the step of passing the mixture over a fine screen is performed while subjecting the mixture of centrifugal force.

6.    A method according to claim 5, wherein said fine screen is provided by the cylindrical screen of a screen bowl centrifuge, the bowl of which said mixture of sea water carrier, oil and solids is introduced, said larger solids particles free of "available" contaminant being obtained at the solids outlet of said centrifuge.

7.    A method according to claim 6, wherein the liquid and finer solids passing through the screen are mixed with the centrate from the screen bowl centrifuge and passed to a second centrifuge for the three phase separation of the sea water, oil and finer solids particles.

8.    A method according to claim 7, wherein the second centrifuge is of the solid bowl decanter type, said finer solids being dishcarged at the solids outlet of said second centrifuge, the heavy phase (sea water) of the centrate passing over a weir for disposal or re-use and the light phase (oil) being skimmed off the centrate pool within the bowl for separate disposal or re-use.

9.    A method according to claim 8, in which the solids discharged from the second centrifuge are returned to the drilling mud used in the drilling process.

10.    A method according to claim 8 or 9, in which the light phase (oil) skimmed off in the second centrifuge is returned to the drilling mud used in the drilling process.

11.    A method according to claim 8, 9 or 10 in which the heavy phase (sea water) centrate from the second centrifuge is passed to a sea water storage tank for re-use as carrier liquid.

12.    A method according to claim 7, wherein the second centrifuge is of the disc bowl type, the centrate of which is passed to a static settling tank to allow removal of the oil which settles on the surface of the sea water carrier in said settling tank.

13.    An apparatus for use in performing the separation method of claim 4, in which the aperture width of the screen openings, the flow rate of the wash liquid to the screen, and, if necessary, the fine solids content in the feed, are set such that substantially all of the contaminant oil present on the surface of larger solids particles which pass over the screen is washed off for transfer to the large available surface area of said finer solids where it can become bonded by surface tension and molecular forces to pass through the screen openings with the wash liquid.

Fig 1

_Fig 2_